# EUROPEAN PATENT SPECIFICATION

(11) **EP 0 347 144 B1**
(45) Date of publication and mention of the grant of the patent: **01.09.1993**
(21) Application number: 89305908.9
(22) Date of filing: 12.06.1989
(51) Int. Cl.: G01L 21/22

(54) **Vacuum gauge**
Vakuummessgerät
Jauge de vide

(30) Priority: 13.06.1988 JP 145112/88
(43) Date of publication of application: 20.12.1989
(73) Proprietor: SEIKO ELECTRONIC COMPONENTS LTD., Sendai-shi, Miyagi-ken 982 (JP)
(72) Inventor: Tamura, Fujio c/o SEIKO ELECTRONIC COMPONENTS LTD., Sendai-shi Miyagi-ken (JP)
(74) Representative: Miller, Joseph

(56) References cited:
- JOURNAL OF VACUUM SCIENCE & TECHNOLOGY A, vol. 4, no. 3, part II, 2nd series, May/June 1986, pages 1728-1731, New York, US; M. ONO et al: "Quartz friction vacuum gauge for pressure range from 0.0001 to 100 Torr"

## Description

This invention relates to vacuum gauges utilising temperature-sensitive quartz resonators, for example, for continuously measuring gas pressure in the range from atmospheric pressure (1.3 x 10⁵ Pa - 10³ Torr) to a lower pressure (about 0.013 Pa - 10⁴ Torr).

Generally, a vacuum gauge of the thermal-conduction type such as a Pirani vacuum gauge is used for measurement of gas pressure in the middle to low pressure range (0.013 Pa to 13 Pa - 10⁻⁴ to 10⁻¹ Torr), but this type of vacuum gauge does not have sufficient sensitivity over 13 Pa (10⁻¹ Torr).

Recently there has been developed a quartz vacuum gauge utilising the dependency of the resonant resistance of a quartz resonator on surrounding gas pressure (hereinafter referred to as a "quartz friction vacuum gauge"). The quartz friction vacuum gauge can be used to measure gas pressure in the range from 1.3 Pa (10⁻² Torr) to atmospheric pressure (130 Pa). This quartz friction vacuum gauge is disclosed in the Journal of Vacuum Science & Technology A, Vol. 4, No. 3, part III, 2nd series May/June 1986, pp 1728-1731, the said gauge having as a sensing element a quartz resonator maintained at constant temperature by a heater on the basis of feedback from a thermocouple. Resonant current from the resonator is measured and converted by appropriate circuitry to provide an indication of pressure.

Thus, the quartz vacuum gauge of the thermal-conduction type has high sensitivity at lower pressures, but cannot effect measurement in the middle to atmospheric pressure range, while the quartz friction vacuum gauge can measure pressure in the range from atmospheric pressure to 1.3 Pa (10⁻² Torr), but cannot be operative in the lower pressure range. Neither the thermal-conduction type quartz vacuum gauge nor the quartz friction vacuum gauge alone can satisfy the practical need, for example, in semi-conductor fabrication processes, for measuring continuously gas pressure in the range from atmospheric pressure to 0.013 Pa (10⁻⁴ Torr).

The present invention, therefore, seeks to provide a vacuum gauge having a quartz resonator operative to effect measurement over a broad range of gas pressures.

According to the present invention, there is provided a vacuum gauge for measuring the pressure of a gas comprising: oscillating means including a quartz resonator to be located in the gas the pressure of which is to be measured and having a resonant frequency dependent on its body temperature which is dependent on relatively low pressure and having a resonant current which is dependent on relatively high pressure; a heat source disposed adjacent to the resonator; controlling means for producing a first output signal which controls the amount of heat produced by the heat source so as to maintain the body temperature and resonant frequency of the resonator substantially constant; converting means for converting the resonant current of the resonator into a corresponding second output signal representative of the value of the pressure of the gas in a relatively high pressure range; and indicating means for indicating the value of the pressure according to the second output signal characterised in that the indicating means is responsive to the first output signal which is representative of the pressure of the gas in a relatively low pressure range, the indicating means being adapted to indicate the value of the pressure according to both the first and second output signals.

The controlling means may include feedback means for comparing the oscillating frequency of the resonator to a given reference frequency to maintain the oscillating frequency substantially constant according to frequency different therebetween, and for regulating the heat source according to the frequency difference.

The indicating means preferably includes adder means for adding the first and second output signals to each other to produce a composite output signal indicative of the value of pressure in the range from 0.013 Pa to 1.3 x 10⁵ Pa (10⁻⁴ Torr to 10³ Torr).

Thus, a pressure detecting element is comprised of a temperature sensitive quartz resonator, which is selectively operated as a pressure sensor in the thermal conduction mode in a lower pressure range and operated as a pressure sensor in the frictional or hydro-dynamic mode in the pressure range from middle to atmospheric pressure such that the single temperature sensitive or temperature-dependent quartz resonator can provide means for continuously measuring broad range of gas pressure from about 0.013 Pa to 1.3 x 10⁵ Pa (10⁻⁴ Torr to 10³ Torr).

A heat source (for example a filament) may be disposed adjacent to a temperature-dependent quartz resonator having a negative temperature co-efficient so as to transfer generated heat to the resonator through the surrounding gas. When the gas pressure decreases, the amount of heat transferred from the heat source by means of the gas molecules is reduced thereby to reduce the body temperature of the temperature-dependent quartz resonator so that its oscillating frequency is increased due to its negative temperature co-efficient. By such correlation, in principle the change of gas pressure is detected in terms of the change of oscillating frequency in the lower range of gas pressure. In practice, the power supply to the heat source is controlled through negative feedback so as to maintain the oscillating frequency of the temperature-dependent quartz resonator substantially constant such that change of gas pressure is actually detected in terms of change in power supply voltage of the voltage to the heat source.

Meanwhile, resonant current of the temperature-dependent quartz resonator is monitored independently of the oscillating frequency and converted into a DC (or resonant) voltage which is dependent on the pressure in the medium to atmospheric pressure range. Thus, both the power supply voltage and the resonant voltage are monitored in parallel so as to effect measurement of pressure throughout the temperature range of about 0.013 Pa to 1.3 x 10⁵ Pa (10⁻⁴ Torr to 10³ Torr).

The invention is illustrated, merely by way of example, in the accompanying drawings, in which:-
Figure 1 is a circuit diagram of one embodiment of a vacuum gauge according to the present invention;
Figure 2 is a characteristic diagram showing the frequency-temperature characteristic of a temperature-dependent quartz resonator used in a vacuum gauge according to the present invention; and
Figures 3A to 3D are diagrams to illustrate the operation of the vacuum gauge of Figure 1.

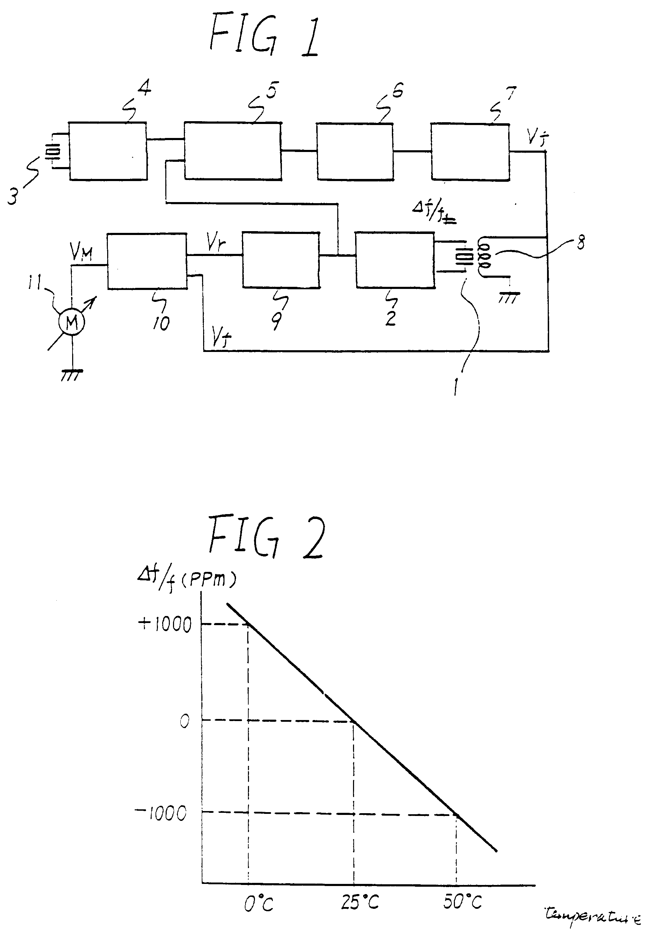

Referring to Figure 1, one embodiment of a vacuum gauge according to the present invention has a temperature-dependent quartz resonator 1 disposed within a surrounding gas the pressure of which is to be measured. The resonator 1 is oscillated by an oscillating circuit 2, and has a frequency temperature characteristic shown in Figure 2 where the oscillating frequency of the resonator is inversely proportional to the body temperature thereof. A reference quartz resonator 3 is oscillated by a second oscillating circuit 4 at a constant or reference frequency which is utilised to regulate the oscillating frequency of the resonator 1. A phase comparator 5 is connected to the oscillating circuits 2, 4 to output a digital signal proportional to phase difference between the output signals from the respective oscillating circuits 2, 4. A low pass filter 6 is connected to convert the digital signal into a corresponding DC voltage, and an electric power amplifier 7 is connected to amplify the DC voltage and to apply the amplified DC voltage Vf to a heat source 8 (for example, a filament) disposed adjacent to the resonator 1 within surrounding gas. As a result, the oscillating frequency of the resonator 1 is controlled always to coincide with that of the reference quartz resonator 3 through a servo loop or a negative feedback loop including the phase comparator 5.

The output signal of the oscillating circuit 2 is separately fed to a rectifier 9 in which the output signal is converted into a rectified DC voltage Vr. An adder 10 receives the rectified DC voltage Vr and the voltage Vf applied to the heat source 8 at its input terminals and outputs an added voltage Vm. A meter 11 is driven by the output voltage Vm to indicate the value of gas pressure.

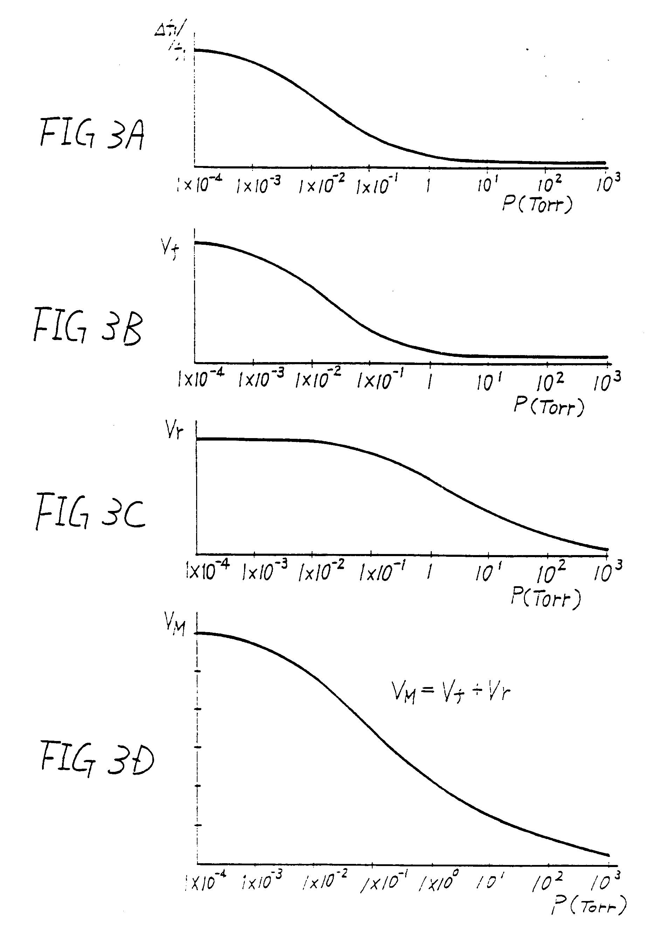

Figures 3A to 3D are diagrams illustrating the operation of the vacuum gauge of Figure 1. Figure 3A shows the relation between the change of oscillating frequency of the resonator 1 and pressure of the surrounding gas, which relation would result if the voltage Vf to the heat source 8 was constant, which is not, in fact, the case. As shown, when the gas pressure increases, the amount of heat transferred to the resonator 1 from the heat source 8 through the surrounding gas is accordingly increased so that the oscillating frequency of the resonator 1 is lowered due to its negative temperature co-efficient shown in Figure 2. If this were the case the resonator 1 would not exhibit substantial sensitivity or response above a pressure range of 133 Pa (1 Torr) due to thermal saturation.

Figure 3B shows the relation between the pressure of the surrounding gas and the voltage Vf to the heat source 8, i.e. the output voltage of the power amplifier 7, which voltage is controlled to maintain the oscillating frequency of the oscillating circuit 2 to coincide with the constant oscillating frequency of the oscillating circuit 4. When the pressure begins to increase, the oscillating frequency of the resonator 1 tends to decrease. At this time, the oscillating frequency deviates from the reference frequency of the reference quartz resonator 3 and the frequency difference therebetween becomes relatively great in the positive direction so that the phase comparator 5 outputs a digital signal having greater or coarse value. Accordingly, the low pass filter 6 reduces its DC output signal, and the power amplifier 7 consequently reduces the voltage Vf so as to reduce the amount of heat transferred from the heat source 8 to the resonator 1 thereby to cancel the effect of change of pressure. As a result, the oscillating frequency of the resonator 1 is maintained constant whilst the voltage Vf to the heat source 8 is changed in accordance with pressure. As shown in Figures 3A and 3B, the relation between the voltage Vf and pressure is quite similar to that between the oscillating frequency change Δ f/f of the resonator 1 and pressure. Thus, the value of the voltage Vf is a measure of pressure, whilst maintaining the resonator 1 oscillating at its resonant frequency.

Figure 3C shows the relation between pressure and the resonant voltage Vr which is converted from the resonant current of the resonator 1 whilst oscillating at the resonant frequency. As shown, the resonant voltage Vr changes to decrease in the pressure range over 13 Pa (10⁻¹ Torr) due to frictional resistance of the gas applied to the resonator 1. Thus, the voltage Vr is also a measure of gas pressure.

Figure 3D shows the relation between the output voltage Vm of the adder 10, which is the combination of the voltages Vf and Vr ( $\text{Vm = Vf + Vr}$ ) 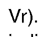 . The voltage Vm operates the meter 11 to indicate the value of the gas pressure surrounding the resonator 1. The voltage Vf is dominant in the pressure range below 13 Pa (10⁻¹ Torr) and the voltage Vr is dominant in the pressure range above 13 Pa (10⁻¹ Torr) so that the vacuum gauge has effective sensitivity as a whole over the pressure range from about 0.013 Pa to 1.3 x 10⁵ Pa (10⁻⁴ Torr to 10³ Torr).

Since the temperature-sensitive quartz resonator is utilised for measurement of the lower gas pressure in the thermal conduction mode due to pressure dependency of the temperature-sensitivity and utilised for the measurement of the upper gas pressure range in the frictional mode due to dependency of resonant current on the gas pressure, the single resonator 1 can continuously measure a relatively wide range of gas pressure (0.013 Pa to 1.3 x 10⁵ Pa - 10⁻⁴ Torr to 10³ Torr), thereby providing great practical advantage.

## Claims

1. A vacuum gauge for measuring the pressure of a gas, comprising: oscillating means (1,2) including a quartz resonator (1) to be located in the gas the pressure of which is to be measured and having a resonant frequency dependent on its body temperature which is dependent on relatively low pressure and having a resonant current which is dependent on relatively high pressure; a heat source (8) disposed adjacent to the resonator (1); controlling means (5,6,7) for producing a first output signal (Vf) which controls the amount of heat produced by the heat source so as to maintain the body temperature and resonant frequency of the resonator (1) substantially constant; converting means (9) for converting the resonant current of the resonator into a corresponding second output signal (Vr) representative of the value of the pressure of the gas in a relatively high pressure range; and indicating means (10,11) for indicating the value of the pressure according to the second output signal (Vr), characterised in that the indicating means (10,11) is also responsive to the first output signal (Vf) which is representative of the pressure of the gas in a relatively low pressure range, the indicating means (10,11) being adapted to indicate the value of the pressure according to both the first and second output signals (Vf, Vr).

2. A vacuum gauge as claimed in claim 1 characterised in that the controlling means (5, 6, 7) includes feedback means (5) for comparing the oscillating frequency of the resonator (1) to a given reference frequency to maintain the oscillating frequency substantially constant according to frequency different therebetween, and for regulating the heat source (8) according to the frequency difference.

3. A vacuum gauge as claimed in claim 1 or 2 characterised in that the indicating means includes adder means (10) for adding the first and second output signals to each other to produce a composite output signal indicative of the value of pressure in the range from 0.013 Pa to 1.3 x 10⁵ Pa (10⁻⁴ Torr to 10³ Torr).

## Patentansprüche

1. Unterdruckmesser zur Messung des Drucks eines Gases mit einem Oszillator (1, 2), der einen Quarz-Resonator (1) enthält, der in dem hinsichtlich seines Druckes zu messenden Gas angeordnet ist und eine von seiner Körpertemperatur abhängige Resonanzfrequenz, die von einem relativ kleinen Druck abhängig ist, und einen von einem relativ hohen Druck abhängigen Resonanzstrom besitzt; einer benachbart zum Resonator (1) angeordneten Wärmequelle (8); einer Steueranordnung (5, 6, 7) zur Erzeugung eines ersten Signals (Vf), das die von der Wärmequelle erzeugte Wärmemenge derart steuert, daß die Körpertemperatur und die Resonanzfrequenz im wesentlichen konstant gehalten werden; einem Umsetzer (9) zur Umsetzung des Resonanzstroms des Resonators in ein entsprechendes zweites Ausgangssignal (Vr), das ein Maß für den Wert des Gasdrucks in einem Bereich relativ hohen Drucks ist; und einer Anzeigeanordnung (10, 11) zur Anzeige des Druckwertes gemäß dem zweiten Ausgangssignal (Vr), **dadurch gekennzeichnet**, daß die Anzeigeanordnung (10, 11) auch auf das erste Ausgangssignal (Vf) anspricht, das ein Maß für den Gasdruck in einem Bereich relativ kleinen Drucks ist, und daß die Anzeigeanordnung (10 11) zur Anzeige des Druckwertes gemäß sowohl dem ersten als auch dem zweiten Ausgangssignals (Vf, Vr) dient.

2. Unterdruckmesser nach Anspruch 1, **dadurch gekennzeichnet**, daß die Steueranordnung (5, 6, 7) eine Rückkoppelschleife (5) zum Vergleich der Oszillatorfrequenz des Resonators (1) mit einer gegebenen Bezugsfrequenz enthält, um die Oszillatorfrequenz gemäß der Frequenzdifferenz zwischen diesen Frequenzen im wesentlichen konstant zu halten und die Wärmequelle (8) in Abhängigkeit von der Frequenzdifferenz zu regeln.

3. Unterdruckmesser nach Anspruch 1 oder 2, **dadurch gekennzeichnet**, daß die Anzeigeanordnung einen Addierer (10) zur Addition des ersten und zweiten Ausgangssignals enthält, um ein zusammengesetztes Ausgangssignal zu erzeugen, das ein Maß für den Druckwert in Bereich von 0,013 Pa bis 1,3 x 10⁵ Pa (10⁻⁴ Torr bis 10³ Torr) ist.

## Revendications

1. Une jauge à vide pour la mesure de la pression d'un gaz comprenant : des moyens d'oscillation (1, 2) comprenant un résonateur à quartz (1) prévu pour être placé dans le gaz dont on doit mesurer la pression et ayant une fréquence de résonance qui dépend de la température de son corps, dépendant elle-même de la pression lorsque celle-ci est relativement faible, et ayant un courant de résonance qui dépend de la pression lorsque celle-ci est relativement élevée; une source de chaleur (8) placée en position adjacente au résonateur (1); des moyens de commande (5, 6, 7) qui sont destinés à produire un premier signal de sortie (Vf) qui commande la quantité de chaleur qui est produite par la source de chaleur, de façon à maintenir pratiquement constante la température du corps et la fréquence de résonance du résonateur (1); des moyens de conversion (9) qui sont destinés à convertir le courant de résonance du résonateur en un second signal de sortie correspondant (Vr), représentatif de la valeur de la pression du gaz dans une gamme de pression relativement élevée; et des moyens indicateurs (10, 11) pour indiquer la valeur de la pression conformément au second signal de sortie (Vr), caractérisée en ce que les moyens indicateurs (10, 11) réagissent également au premier signal de sortie (Vf) qui est représentatif de la pression du gaz dans une gamme de pression relativement faible, les moyens indicateurs (10, 11) étant conçus pour indiquer la valeur de la pression conformément à la fois aux premier et second signaux de sortie (Vf, Vr).

2. Une jauge à vide selon la revendication 1, caractérisée en ce que les moyens de commande (5, 6, 7) comprennent des moyens d'asservissement (5) qui sont destinés à comparer la fréquence d'oscillation du résonateur (1) avec une fréquence de référence donnée, pour maintenir la fréquence d'oscillation pratiquement constante, conformément à la différence de fréquence entre elles, et à réguler la source de chaleur (8) conformément à la différence de fréquence.

3. Une jauge à vide selon la revendication 1 ou 2, caractérisée en ce que les moyens indicateurs comprennent des moyens additionneurs (10) qui sont destinés à additionner les premier et second signaux de sortie, pour produire un signal de sortie composite représentatif de la valeur de la pression dans la gamme allant de 0,013 Pa à 1,3 x 10⁵ Pa (10⁻⁴ Torr à 10³ Torr).
